(19) Europäisches Patentamt
European Patent Office
Office européen des brevets

(11) Numéro de publication : **0 426 515 B1**

(12) # FASCICULE DE BREVET EUROPEEN

(45) Date de publication du fascicule du brevet : **28.04.93 Bulletin 93/17**

(51) Int. Cl.[5] : **G01V 1/28,** G01V 1/34

(21) Numéro de dépôt : **90402772.9**

(22) Date de dépôt : **05.10.90**

(54) **Perfectionnements apportés aux procédés de prospection sismique.**

(30) Priorité : **30.10.89 FR 8914208**

(43) Date de publication de la demande : **08.05.91 Bulletin 91/19**

(45) Mention de la délivrance du brevet : **28.04.93 Bulletin 93/17**

(84) Etats contractants désignés : **BE DE GB IT NL**

(56) Documents cités :
**GB-A- 2 161 933**
**US-A- 4 679 174**

(73) Titulaire : **TOTAL COMPAGNIE FRANCAISE DES PETROLES Société Anonyme**
**5, rue Michel Ange**
**F-75781 Paris Cédex 16 (FR)**

(72) Inventeur : **Vujasinovic, Yasmina**
**10, rue Vital**
**F-75116 Paris (FR)**
Inventeur : **Raoult, Jean-Jacques**
**77, Avenue Félix Faure**
**F-92000 Nanterre (FR)**

(74) Mandataire : **Jolly, Jean-Pierre et al**
**Cabinet Jolly 54, rue de Clichy**
**F-75009 Paris (FR)**

EP 0 426 515 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne des perfectionnements apportés aux procédés de prospection sismique du sous-sol.

On sait que, dans leur principe, ces procédés consistent à émettre des ondes sismiques, à partir d'un point de la surface du sol ou à proximité de la surface de la mer, en provoquant par exemple l'explosion d'une charge puissante, et à recueillir ensuite, en différents points de la surface, à l'aide de détecteur dits géophones à terre ou hydrophones en mer, les ondes sismiques réfléchies par les interfaces ou "horizons" entre couches géologiques. Ces détecteurs convertissent en signaux électriques les ondes réfléchies et ils sont disposés de façon telle et en nombre suffisant pour que les signaux enregistrés permettent de reconstituer la configuration des couches géologiques. Dans la pratique, le signal enregistré par un géophone ou par un hydrophone présente une amplitude qui varie en fonction du temps et les pics enregistrés correspondent normalement à des horizons entre couches.

En réalité, l'interprétation des "données" d'un tir, c'est-à-dire des signaux enregistrés par les capteurs, n'est qu'approximative, car les méthodes de traitement basées sur la résolution numérique de l'équation des ondes traitent simultanément la phase et l'amplitude des données. Or, alors que les ondes sismiques se propagent dans un milieu tridimensionnel, elles sont en général traitées avec une approximation bidimensionnelle, suivant un modèle simplifié qui diffère de la réalité.

Certes, les données brutes sont préalablement traitées par des programmes de gain automatique (en anglais "automatic gain control" ou a.g.c.) destinés notamment à majorer les amplitudes des signaux, car, au bout d'une très courte durée, ceux-ci deviennent extrêmement faibles, mais les données ainsi amplifiées sont ensuite traitées suivant des modèles qui diffèrent de la réalité. Autrement dit, les données relevées sur le terrain ne correspondent pas à la méthode de traitement numérique qu'on va leur appliquer et les images des formations géologiques qui sont élaborées à partir de ces données ne sont pas d'une bonne qualité.

La présente invention vise à améliorer l'image obtenue à partie de telles données, en les traitant de façon connue à l'aide d'un programme numérique à approximation bidimensionnelle, mais en adaptant les amplitudes de ces données, préalablement à un tel traitement, de façon à ce qu'elles correspondent aux amplitudes d'ondes qui se seraient propagées suivant le modèle mathématique servant de base à ce programme.

L'invention a par conséquent pour objet un procédé de prospection sismique du sous-sol, du type dans lequel on émet une onde sismique en un point déterminé de la surface du sol ou à proximité de la surface de la mer et l'on enregistre en fonction du temps les ondes réfléchies par les interfaces entre les formations géologiques sous-jacentes à l'aide de récepteurs disposés en une pluralité d'emplacements à la surface du sol ou à proximité de la surface de la mer, on traite les données enregistrées par lesdits capteurs à l'aide d'un programme mathématique fondé sur un modèle simplifié de propagation des ondes et l'on élabore à partir des données ainsi traitées une représentation graphique des formations géologiques, ce procédé étant caractérisé en ce que, préalablement au traitement des données enregistrées, on corrige les amplitudes de ces données de façon à ce qu'elles correspondent à celles d'ondes qui se seraient propagées suivant ledit modèle simplifié de propagation.

En adaptant seulement l'amplitude des données, la représentation résultante des formations géologiques ne sera pas modifiée en position, et l'image obtenue par le procédé selon l'invention sera simplement plus nette et plus précise que celle que l'on obtiendrait par les procédés usuels. On peut donc dire que le procédé conforme à l'invention permet, par un simple artifice de correction des données, préalablement à leur traitement par un modèle mathématique connu en soi, d'obtenir une meilleure représentation de la configuration recherchée.

On notera que le procédé conforme à l'invention utilise des moyens qui vont à l'encontre de ce qu'envisagerait normalement un spécialiste de la technique considérée : il paraîtrait en effet plus logique de modifier le programme mathématique utilisé pour mieux le conformer à la propagation réelle des ondes, que de corriger les données obtenues par des essais réels pour adapter leur amplitude et la rendre conforme à celle qui aurait été la leur si elles s'étaient propagées conformément au modèle mathématique. Toutefois, cela augmenterait les temps de calcul dans une proportion telle que la mise en pratique de ce procédé deviendrait impossible.

Dans la pratique, on traitera les données réelles d'un tir avec le programme habituel fondé sur un modèle mathématique, par exemple le programme dit Migration Profondeur avant Addition et l'on obtiendra une première image des formations géologiques correspondantes. Cette image sera à son tour traitée de façon inversée par le même programme afin d'obtenir des données synthétiques correspondantes, et l'on adaptera ensuite l'amplitude des données réelles à celle des données synthétiques, pour obtenir des données adaptées, qui seront alors traitées par le même programme pour fournir une seconde image des formations géologiques concernées, d'une bien meilleure qualité que la première image.

L'invention a donc également pour objet une forme de mise en oeuvre du procédé décrit ci-dessus, caractérisée en ce que l'on traite les données réelles enregistrées par les capteurs à l'aide d'un programme mathématique fondé sur un modèle simplifié de propagation des ondes, en vue d'obtenir une première représentation graphique des formations géologiques testées, on traite ensuite de façon inversée cette première image par le même programme, en vue d'obtenir des données synthétiques qui lui correspondent, on corrige les données réelles enregistrées pour adapter leur amplitude à celle des données synthétiques, et l'on traite lesdites données adaptées par le même programme, en vue d'obtenir une seconde représentation graphique améliorée des formations géologiques.

Ces opérations peuvent être répétées à plusieurs reprises, jusqu 'à ce que l'image finale soit satisfaisante, mais, généralement, une seule mise en oeuvre du procédé conduira à des résultats suffisants.

Le procédé faisant l'objet de la présente invention consiste donc à corriger l'amplitude des données sismiques de façon telle qu'elle corresponde à celle obtenue avec un champ d'ondes se propageant suivant l'équation paraxiale dans un milieu bidimensionnel. Ce procédé s'applique, bien entendu, quel que soit le programme de traitement utilisé.

Il sera décrit ci-après en détail dans son application au processus de traitement bien connu dans la technique, que l'on appelle "Migration Profondeur avant Addition" (Voir CLAERBOUT J.F., 1985, Imaging the earth interior, Blackwell.; voir également DENELLE E., DEZARD Y. et RAOULT J.J 1985 "Implementation of a 2-D prestack depth migration scheme on a Cray 1-S", présenté au 55ème Anual SEG Meeting, Washington D.C. USA, ou, des mêmes, "2-D prestack depth migration in the (s,g,w,) domain", présenté au 56ème Annual SEC Meeting, Houston 1986). Dans cette application, on expliquera le processus utilisé pour générer les données synthétiques et pour corriger les amplitudes des données réelles avant de les traiter à nouveau, en vue d'améliorer le rapport signal/bruit et de réduire l'étendue des taches de focalisation.

On rappellera d'abord que la méthode dite Migration Profondeur avant Addition est fondée sur une approximation paraxiale de l'équation des ondes à deux dimensions.

On dispose du champ d'onde $p(x_s,x_g, z=0,t)$ enregistré à la surface de la terre. On extrapole ce champ d'ondes vers le bas en utilisant l'équation suivante (Claerbout, 1985) :

$$\frac{\partial}{\partial z}p(x_s,x_g,z,t) = \left\{\left[\frac{1}{v^2(x_s,z)}\frac{\partial^2}{\partial x_s^2}\right]^{1/2} + \left[\frac{1}{v^2(x_g,z)}\frac{\partial^2}{\partial x_g^2}\right]^{1/2}\right\} p(x_s,x_g,z,t)$$

La section migrée est obtenue en extrayant du champ ainsi calculé les points où la source et le capteur coïncident.

L'expression donnant la section migrée est donc :

$$p(x_s = x_g,z,t = 0)$$

Pour pouvoir générer des données synthétiques, on utilise la même approximation paraxiale que dans la migration, mais on extrapole vers le haut. Ceci revient à changer le signe de $\frac{\partial p}{\partial z}$ dans l'équation paraxiale.

On introduit la section migrée comme source. Au temps t = 0, on introduit ces sources à toutes les profondeurs, et on extrapole vers le haut pour générer des points de tir à la surface.

Pour obtenir une répartition spatiale lisse de la fonction source, on utilise une fenêtre de Hanning. Pour un point de tir donné, si la valeur de la source est S(z) à la profondeur z, on introduit une source S(x,z) suivant le point x dans une fenêtre centrée au point zéro.

On a vérifié que la migration des données synthétiques ainsi obtenues redonne l'image migrée qui a servi à les générer.

On corrige ensuite l'amplitude des données sismiques pour que leur enveloppe corresponde à celle des données synthétiques générées à partir de la section migrée.

Pour cela, à tout point au temps t et à l'offset h du tir, on cherche le paramètre $k_{t,h}$ qui minimise la fonctionnelle coût suivante :

$$C(k_{t,h}) = \|S - k_{t,h}P\|^2$$

Dans cette fonction, S correspond à un vecteur de points pris dans le voisinage du point situé au temps t et à l'offset h dans les données synthétiques, alors que P est l'équivalent pour les données réelles.

L'expression de $k_{t,h}$ est obtenue après quelques calculs :

$$k_{t,h} = \frac{P^T S}{P^T P}$$

La valeur optimale de $k_{t,h}$ dépend donc du produit scalaire $P^T S$ entre les données synthétiques et les données sismiques mesurées.

On calcule la fonction k(t,h) en chaque point, et on corrige le point de tir p(t,h) par :

$$P_{corr}(t,h) = p(t,h)\ k(t,h)$$

où $P_{corr}(t,h)$ est la valeur du tir corrigé pour l'échantillon situé au temps t et l'offset h.

Le résultat final (image améliorée) est obtenu en utilisant les données corrigées.

Cette procédure peut être répétée de façon itérative jusqu 'à ce que le résultat soit satisfaisant.

Cette forme de mise en oeuvre du procédé est illustrée par la Figure 1 des dessins annexés. Sur ces dessins :

La figure 1 est un schéma d'une forme de mise en oeuvre du procédé conforme à l'invention ;

La figure 2a représente l'image obtenue sans adaptation de l'amplitude des données conformément à l'invention;

La figure 2b représente l'image obtenue après adaptation de l'amplitude des données par le procédé conforme à l'invention ;

Les figure 3a, 3b et 3c montrent respectivement la représentation obtenue par traitement des données brutes, la représentation synthétique obtenue à partir de la représentation précédente et la représentation finale;

Les figures 4a, 4b et 4c montrent respectivement une représentation obtenue avec des données synthétiques d'amplitude correcte, une représentation analogue avec des données dont l'amplitude a été pertubée et la même représentation après traitement de la figure 2b conformément à l'invention.

La figure 1 montre simplement la succession des phases du procédé selon l'invention :

- traitement des données initiales par un programme modélisé,
- obtention d'une première représentation graphique des formations géologiques,
- traitement inversé de cette représentation graphique par le même programme modélisé,
- obtention de données synthétiques,
- adaptation de l'amplitude des données réelles en fonction de celle des données synthétiques,
- obtention de données corrigées,
- traitement modélisé des données corrigées par le même programme,
- obtention d'une seconde représentation graphique améliorée des formations géologiques.

La figure 2a montre l'image obtenue par le traitement direct de données, sans adaptation de leur amplitude.

La figure 2b montre l'image améliorée obtenue après un traitement conforme à l'invention. L'image est de meilleure qualité, les horizons y sont plus continus.

La taille des données utilisées est de 100 traces par tir avec 375 échantillons en temps. Le pas d'échantillonage est 0,004s, la distance entre tir est de 25m, et la distance maximum est 1500m.

La figure 3a représente une image obtenue dans les mêmes conditions à partir de données initiales. La figure 3b représente la même image synthétique après traitement inversé par le programme modélisé. La figure 3c montre la même image après traitement conforme à l'invention. Elle est considérablement améliorée par rapport à la figure 3a.

Enfin, les figures 4a,4b et 4c illustrent l'intérêt d'un traitement en amplitude des données enregistrées.

En effet, la figure 4a montre la représentation graphique obtenue à partir de données synthétiques d'amplitude correcte : l'image est de bonne qualité et, en particulier, les failles y apparaissent très nettement.

La figure 4b montre, elle, une image analogue obtenue par traitement de données dont l'amplitude a été perturbée: la qualité de l'image obtenue est beaucoup plus médiocre que celle de la figure 1.

La figure 4c montre enfin l'image obtenue à partir de la représentation de la figure 4b, après traitement conforme à l'invention : l'image résultante est très proche de celle obtenue avec des données d'amplitude correcte (cas de la figure 4a) et le traitement conforme à l'invention permet donc d'améliorer considérablement la qualité des représentations obtenues.

Il est clair que le procédé conforme à l'invention est utilisable avec des programmes de traitement autres que la Migration Profondeur avant Addition, par exemple avec une Migration Temps avant Addition ou avec le traitement dit DMO.

## Revendications

1. Procédé de prospection sismique du sous-sol, du type dans lequel on émet une onde sismique en un point déterminé de la surface du sol ou à proximité de la surface de la mer, et l'on enregistre en fonction du

temps les ondes réfléchies par les interfaces entre les formations géologiques sous-jacentes à l'aide de récepteurs disposés en une pluralité d'emplacements a la surface du sol ou à proximité de la surface de la mer, on traite les données enregistrées par lesdits capteurs à l'aide d'un programme mathématique fondé sur un modèle simplifié de propagation des ondes et l'on élabore à partir des données ainsi traitées une représentation graphique des formations géologiques, ce procédé étant caractérisé en ce que, préalablement au traitement des données enregistrées, on corrige les amplitudes de ces données de façon à ce qu'elles correspondent à celles d'ondes qui se seraient propagées suivant ledit modèle simplifié de propagation.

2. Procédé selon la revendication 1, caractérisé en ce que l'on traite les données réelles enregistrées par les capteurs à l'aide d'un programme mathématique fondé sur un modèle simplifié de propagation des ondes, en vue d'obtenir une première représentation graphique des formations géologiques testées, on traite ensuite de façon inversée cette première image par le même programme, en vue d'obtenir des données synthétiques qui lui correspondent, on corrige les données réelles enregistrées pour adapter leur amplitude à celle des données synthétiques, et l'on traite lesdites données adaptées par le même programme, en vue d'obtenir une seconde représentation graphique améliorée des formations géologiques.

## Patentansprüche

1. Verfahren zur seismischen Prospektion unterirdischen Schichten, bei dem eine seismische Welle an einer vorbestimmten Stelle der Bodenoberfläche oder nahe der Meeresoberfläche ausgesendet und in Abhängigkeit von der Zeit die an den Grenzflächen zwischen den darunter liegenden geologischen Formationen reflektierten Wellen durch an einer Mehrzahl von Stellen an der Bodenoberfläche oder nahe der Meeresoberfläche angeordnete Empfänger aufgezeichnet werden, wobei die von den Empfängern aufgezeichneten Angaben mit Hilfe eines von einem vereinfachten Wellenausbreitungsmodell ausgehenden mathematischen Programms verarbeitet werden, und aus den so verarbeiteten Angaben eine graphische Darstellung der geologischen Formationen erstellt wird,
**dadurch gekennzeichnet,**
daß vor der Verarbeitung der aufgezeichneten Angaben die Amplituden dieser Angaben derart korrigiert werden, daß sie denjenigen von Wellen entsprechen, die sich nach dem vereinfachten Wellenausbreitungsmodell ausgebreitet haben würden.

2. Verfahren nach Anspruch 1, dadurch gekennzeichnet, daß die von den Empfängern aufgezeichneten tatsächlichen Angaben mit Hilfe eines auf der Grundlage eines vereinfachten Wellenausbreitungsmodells erstellten mathematischen Programms dahingehend verarbeitet werden, um eine erste graphische Darstellung der untersuchten geologischen Formationen zu erhalten, daß danach dieses erste Bild durch das gleiche Programm in umgekehrter Form bearbeitet wird, um dem Bild entsprechende synthetische Angaben zu erhalten, daß die aufgezeichneten tatsächlichen Angaben korrigiert werden, um ihre Amplitude an diejenige der synthetischen Angabe anzupassen, und daß die angepaßten Daten durch das gleiche Programm verarbeitet werden, um eine verbesserte zweite graphische Darstellung der geologischen Formationen zu erhalten.

## Claims

1. Method for seismically prospecting the subsoil, of the type in which a seismic wave is emitted at a predetermined point of the surface of the ground or in the vicinity of the surface of the sea and the waves reflected by the interfaces between the subjacent geological formations are recorded as a function of time with the aid of receivers arranged at a plurality of locations on the surface of the ground or in the vicinity of the surface of the sea, the data recorded by the said sensors are processed with the aid of a mathematical program based on a simplified wave-propagation model and a graphical representation of the geological formations is built up from the data thus processed, this method being characterised in that, prior to the processing of the recorded data, the amplitudes of these data are corrected so that they correspond to those of waves which would be propagated according to the said simplified propagation model.

2. Method according to Claim 1, characterised in that the actual data recorded by the sensors are processed with the aid of a mathematical program based on a simplified wave-propagation model, with a view to

obtaining a first graphical representation of the geological formations tested, next, this first image is processed in a reverse manner by the same program, with a view to obtaining synthetic data which correspond to it, the actual recorded data are corrected in order to modify their amplitude to that of the synthetic data and the said data modified by the same program are processed, with a view to obtaining a second, improved graphical representation of the geological formations.

FIG.1

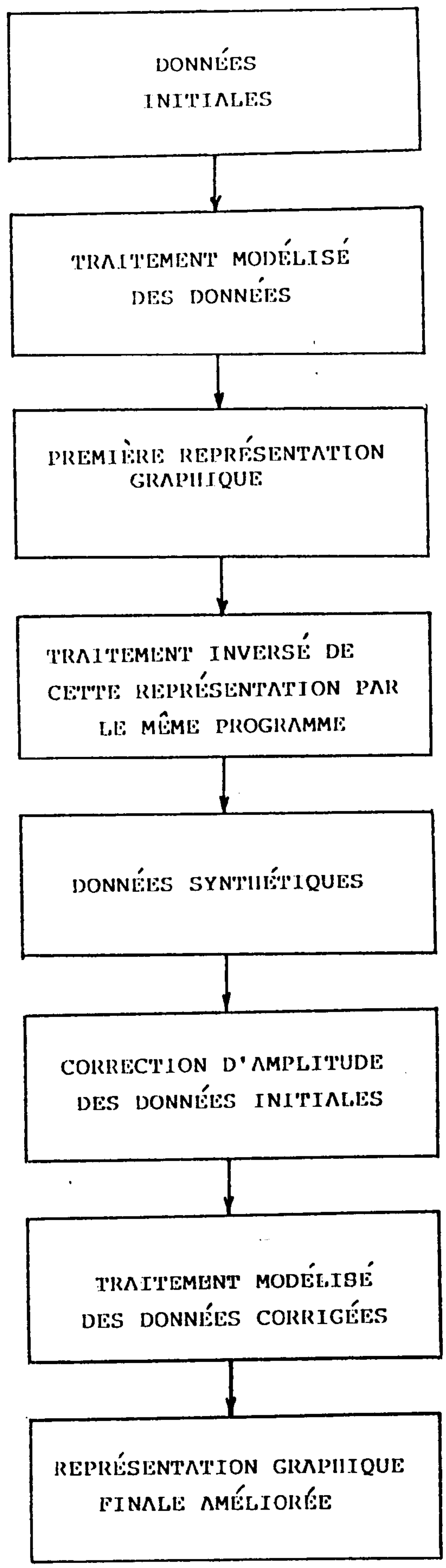
DONNÉES INITIALES
TRAITEMENT MODÉLISÉ DES DONNÉES
PREMIÈRE REPRÉSENTATION GRAPHIQUE
TRAITEMENT INVERSÉ DE CETTE REPRÉSENTATION PAR LE MÊME PROGRAMME
DONNÉES SYNTHÉTIQUES
CORRECTION D'AMPLITUDE DES DONNÉES INITIALES
TRAITEMENT MODÉLISÉ DES DONNÉES CORRIGÉES
REPRÉSENTATION GRAPHIQUE FINALE AMÉLIORÉE

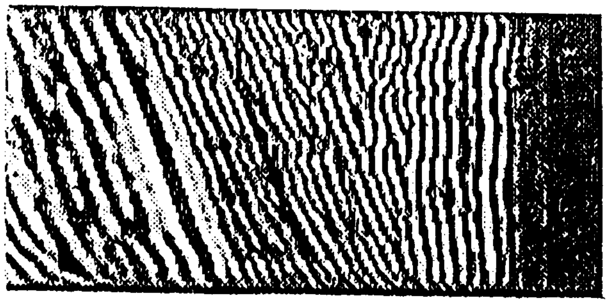

FIG. 2a

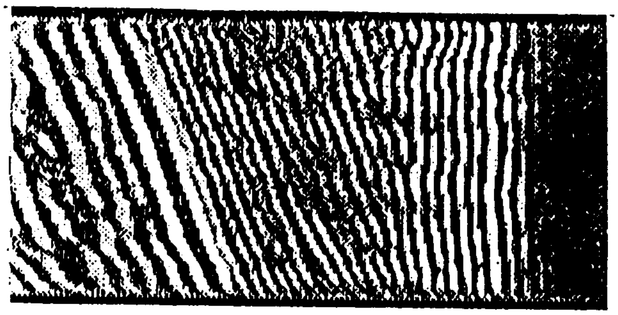

FIG. 2b

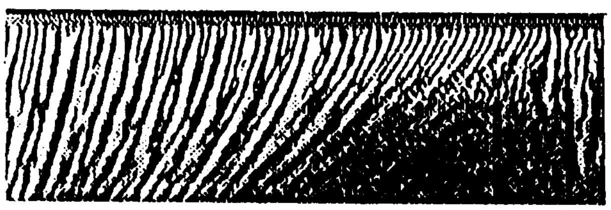

FIG. 3a

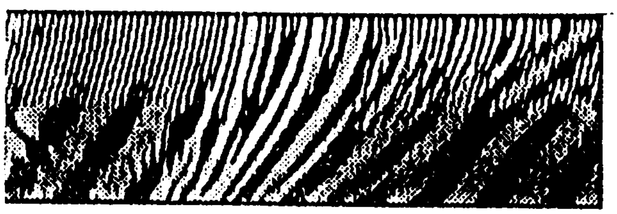

FIG. 3b

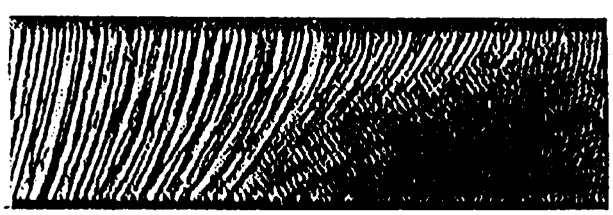

FIG. 3c

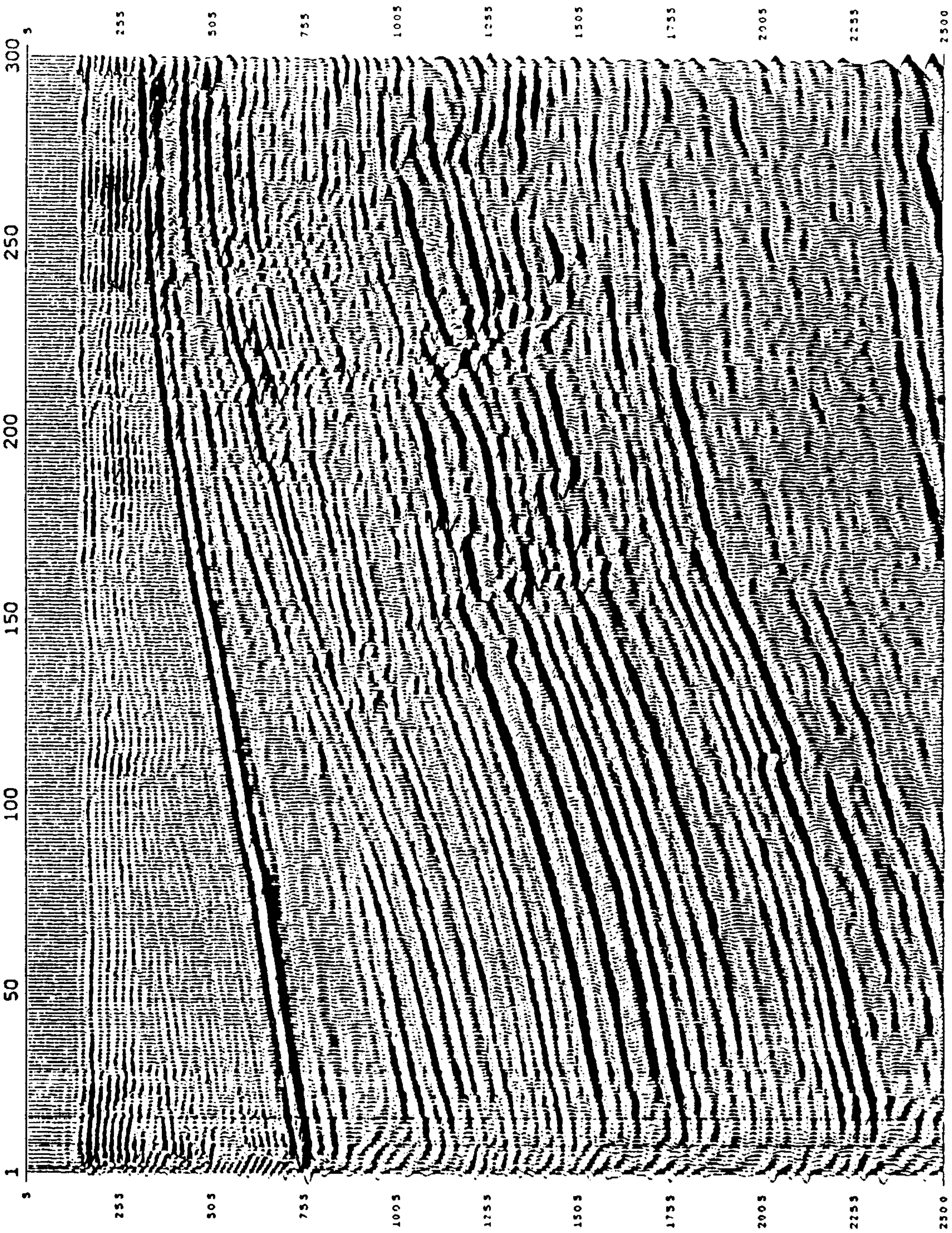


FIG.4a

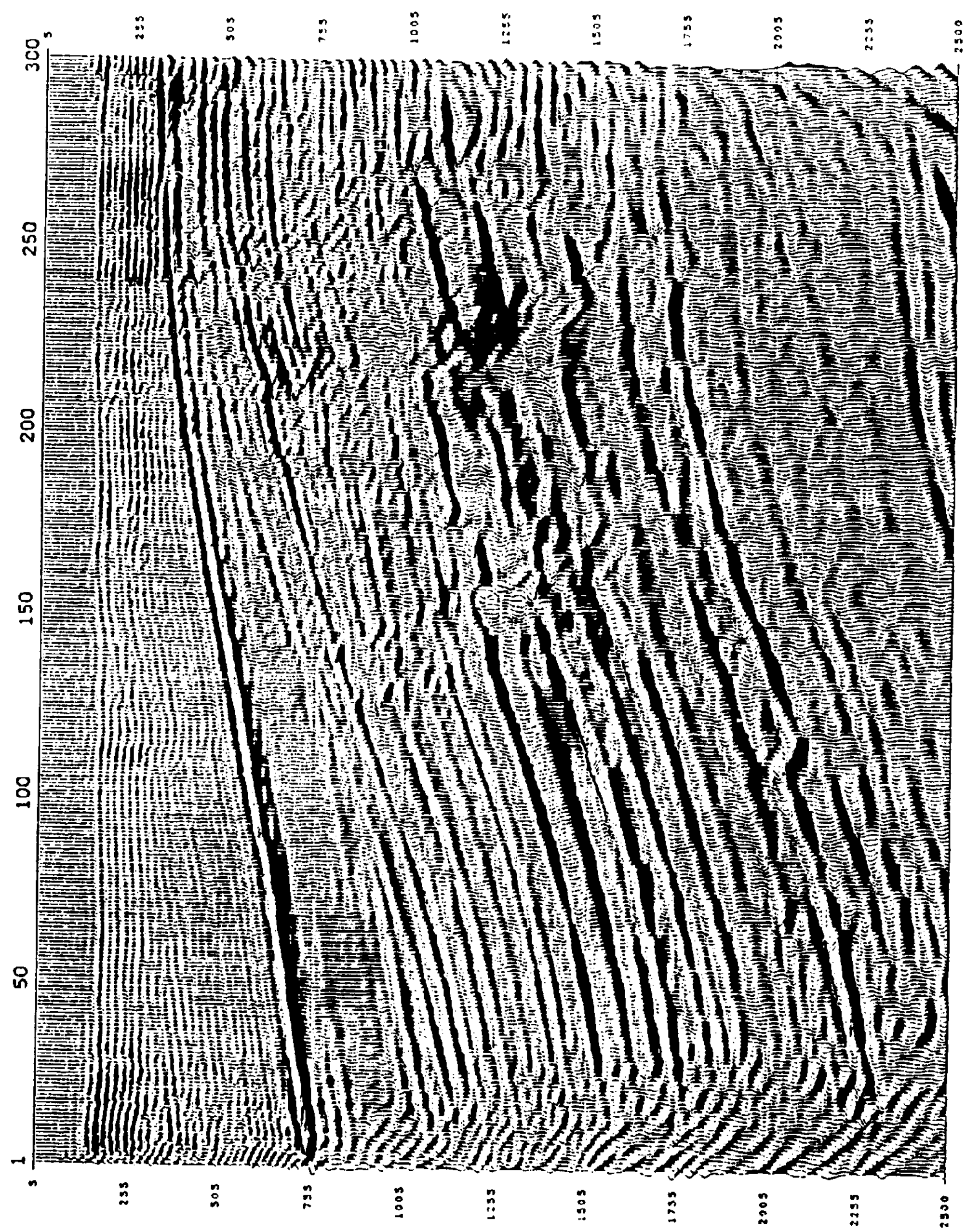


FIG.4b

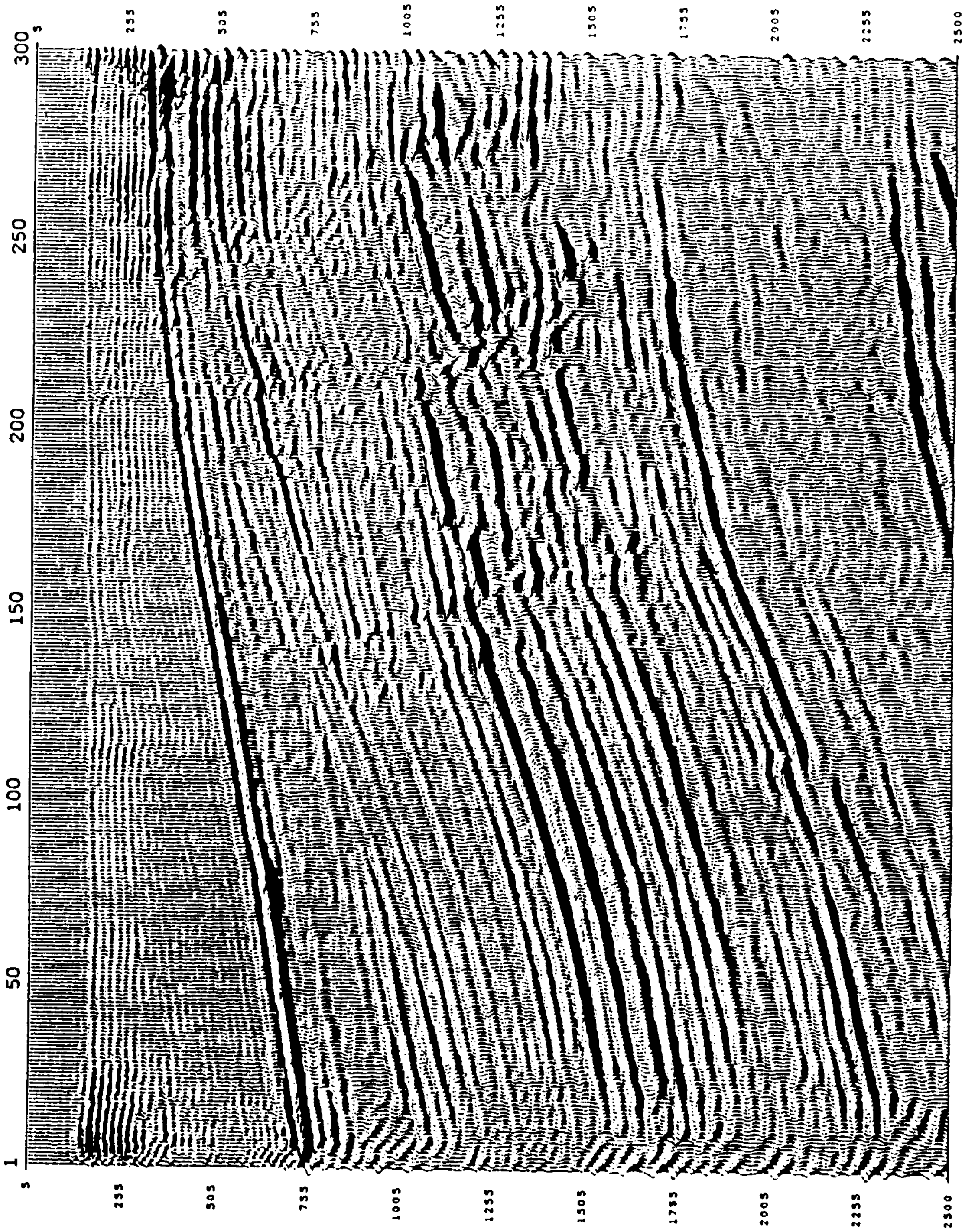
1
50
100
150
200
250
300
5
255
505
755
1005
1255
1505
1755
2005
2255
2500

FIG.4c